# EUROPÄISCHE PATENTSCHRIFT

(11) **EP 2 914 940 B1**
(45) Veröffentlichungstag und Bekanntmachung des Hinweises auf die Patenterteilung: **17.08.2016**
(21) Anmeldenummer: 13811111.7
(22) Anmeldetag: 30.10.2013
(51) Int. Cl.: G01H 9/00, G01B 9/02

(54) **VERFAHREN UND VORRICHTUNG ZUR LASER-OPTISCHEN ERFASSUNG EINER OBERFLÄCHENBEWEGUNG EINER PROBE**
METHOD AND DEVICE FOR LASER-OPTICAL DETECTION OF A SURFACE MOVEMENT OF A SAMPLE
PROCÉDÉ ET DISPOSITIF POUR DÉTECTER PAR OPTIQUE LASER UN MOUVEMENT DE SURFACE D'UN ÉCHANTILLON

(30) Priorität: 31.10.2012 AT 11712012
(43) Veröffentlichungstag der Anmeldung: 09.09.2015
(73) Patentinhaber: Fill Gesellschaft m.b.H., 4942 Gurten (AT); Research Center for Non Destructive Testing GmbH, 4040 Linz (AT)
(72) Erfinder: REITINGER, Bernhard Josef, A-4072 Alkoven (AT)
(74) Vertreter: Burger, Hannes
(86) Internationale Anmeldenummer: PCT/AT2013/050207
(87) Internationale Veröffentlichungsnummer: WO 2014/066922

(56) Entgegenhaltungen:
- US-A- 5 080 491
- US-A- 5 131 748
- DELAYE P ET AL: "DETECTION OF ULTRASONIC MOTION OF A SCATTERING SURFACE BY PHOTOREFRACTIVE INP:FE UNDER AN APPLIED DC FIELD", JOURNAL OF THE OPTICAL SOCIETY OF AMERICA - B, OPTICAL SOCIETY OF AMERICA, WASHINGTON, US, Bd. 14, Nr. 7, 1. Juli 1997 (1997-07-01), Seiten 1723-1734, XP001088320, ISSN: 0740-3224
- ARMIN HOCHREINER ET AL: "Quasi-balanced two-wave mixing interferometer for remote ultrasound detection", JOURNAL OF MODERN OPTICS, Bd. 60, Nr. 16, 20. September 2013 (2013-09-20), Seiten 1327-1331, XP055102185, ISSN: 0950-0340, DOI: 10.1080/09500340.2013.837981

## Beschreibung

Die Erfindung betrifft ein Verfahren zur Laser-optischen Erfassung einer Oberflächenbewegung einer Probe, bei dem ein aus einem Laserstrahl erhaltener erster Referenzstrahl mit einem von dem besagten Laserstrahl erhaltenen, auf die Probe ausgerichteten und von dieser reflektierten ersten Meßstrahl in einem ersten photorefraktiven/elektro-optischen Element überlagert wird. Das aus dem ersten photorefraktiven/elektro-optischen Element austretende Licht wird in ein erstes elektrisches Signal umgewandelt und anschließend ausgewertet.

Weiterhin betrifft die Erfindung eine Anordnung zur Laser-optischen Erfassung einer Oberflächenbewegung einer Probe, umfassend
- eine Laserquelle, welche einen Laserstrahl erzeugt,
- ein erstes photorefraktives/elektro-optisches Element,
- Mittel zum Überlagern eines aus einem Laserstrahl erhaltenen ersten Referenzstrahls mit einem von diesem Laserstrahl erhaltenen, auf die Probe ausgerichteten und von der Probe reflektierten ersten Meßstrahls in dem ersten photorefraktiven/elektro-optischen Element und
- Mittel zum Umwandeln des aus dem ersten photorefraktiven/elektro-optischen Element austretenden Lichts in ein erstes elektrisches Signal.

Ein solches Verfahren beziehungsweise eine solche Anordnung sind grundsätzlich bekannt und werden beispielsweise zur Materialprüfung eingesetzt. Dabei wird eine Probe zum Schwingen angeregt, beispielsweise durch einen Anregungslaser, welcher die Probe zu Ultraschallschwingungen anregt. Die an der Oberfläche auftretenden Schwingungen werden Laserinterferometrisch vermessen und geben Aufschluss über Hohlräume im Inneren der Probe sowie über andere Inhomogenitäten.

Weiterer Stand der Technik ist beispielsweise aus der US 5,080,491 A, der US 5,131,748 A, der CA 2,042,352 A1 und der WO 97/39305 A1 bekannt.

Nachteilig an dem eingangs bekannten Verfahren ist, dass das erhaltene Signal relativ stark verrauscht ist. Zwar wird schon in der US 5,080,491 A versucht, eine bessere Signalqualität zu erhalten, jedoch ist der Aufbau technisch aufwendig und teuer. Nachteilig sind auch die Notwendigkeit mechanisch bewegter Spiegel sowie ein schwierig einzustellender Arbeitspunkt.

Eine Aufgabe der Erfindung ist es daher, ein verbessertes Verfahren und eine verbesserte Anordnung zur Laser-optischen Erfassung einer Oberflächenbewegung einer Probe anzugeben. Insbesondere soll die Signalqualität verbessert werden, ohne die zur Messung notwendige Anordnung übermäßig zu verkomplizieren. Im Speziellen sollen auch mechanisch bewegte Teile nach Möglichkeit vermieden werden.

Die Aufgabe der Erfindung wird mit einem Verfahren der eingangs genannten Art gelöst, bei dem ein zum ersten Referenzstrahl im Wesentlichen identer zweiter Referenzstrahl mit einem zum ersten Meßstrahl im Wesentlichen identen zweiten Meßstrahl in einem zweiten photore-fraktiven/elektro-optischen Element überlagert wird und das aus dem zweiten photorefraktiven/elektro-optischen Element austretende Licht in ein zweites elektrisches Signal umgewandelt wird, das vor der Auswertung vom ersten elektrischen Signal subtrahiert wird, wobei an die beiden photorefraktiven/elektro-optischen Elemente zueinander inverse Spannungen angelegt werden.

Die Aufgabe wird weiterhin mit einer Anordnung der eingangs genannten Art gelöst, zusätzlich umfassend:
- ein zweites photorefraktives/elektro-optisches Element,
- Mittel zum Anlegen zueinander inverser Spannungen an das erste und das zweite photorefraktive/elektro-optische Element,
- Mittel zum Erzeugen eines zum ersten Referenzstrahl im Wesentlichen identen zweiten Referenzstrahls,
- Mittel zum Erzeugen eines zum ersten Meßstrahl im Wesentlichen identen zweiten Meßstrahls,
- Mittel zum Überlagern des zweiten Referenzstrahls mit dem zweiten Meßstrahl in dem zweiten photorefraktiven/elektro-optischen Element,
- Mittel zum Umwandeln des aus dem zweiten photorefraktiven/elektro-optischen Element austretenden Lichts in ein zweites elektrisches Signal und
- Mittel zum Auswerten des Differenzsignals zwischen dem ersten elektrischen Signal und dem zweiten elektrischen Signal.

Dadurch dass an die photorefraktiven/elektro-optischen Elemente zueinander inverse Spannungen angelegt werden, sind auch die aus den photorefraktiven/elektro-optischen Elementen austretenden optischen Signale und damit auch die davon abgeleiteten elektrischen Signale zueinander invers. Bei der Auswertung wird nun eine Differenz zwischen dem ersten und dem zweiten elektrischen Signal gebildet. Dadurch wird einerseits die Signalstärke des Meßsignals verdoppelt, auf der anderen Seite werden Störungen, welche z.B. Durch die Erzeugung der Ultraschallwelle entstehen, eliminiert. Auf diese Weise kann das Signal zu Rausch Verhältnis und damit die Laser-optische Erfassung einer Oberflächenbewegung einer Probe deutlich verbessert werden. Vorteilhaft kommt die Meßanordnung gänzlich ohne mechanisch bewegte Teile aus.

An dieser Stelle wird darauf hingewiesen, dass die vorgestellte Anordnung auch als "Vibro-meter" angesehen werden kann.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Laserstrahl in einen ersten und einen zweiten Referenzstrahl sowie einen auf eine Probe ausrichtbaren ersten Meßstrahl aufgeteilt wird und von dem von der Probe reflektierten ersten Meßstrahl ein zweiter Meßstrahl abgezweigt wird. Analog dazu ist es günstig, wenn die Meßanordnung
- Mittel zum Aufteilen des Laserstrahls in einen ersten und einen zweiten Referenzstrahl sowie einen auf eine Probe ausrichtbaren ersten Meßstrahl und
- Mittel zum Abzweigen eines zweiten Meßstrahls von dem von der Probe reflektierten ersten Meßstrahl umfasst.
Auf diese Weise können zwei im Wesentlichen idente Referenzstrahlen beziehungsweise zwei im Wesentlichen idente Meßstrahlen auf vergleichsweise einfache Weise hergestellt werden.

Vorteilhaft ist es dabei,
- wenn der Laserstrahl mit einem ersten polarisierenden Strahlteiler in einen ersten s-polarisierten Referenzstrahl und einen ersten p-polarisierten Meßstrahl aufgeteilt wird,
- wenn mit einem zweiten polarisierenden Strahlteiler von dem von der Probe reflektierten ersten Meßstrahl der s-polarisierte Teil in den zu den photorefraktiven/elektrooptischen Elementen führenden Zweig abgelenkt wird,
- wenn mit einem dritten Strahlteiler ein zweiter s-polarisierter Meßstrahl vom ersten s-polarisierten Meßstrahl abgezweigt wird und
- wenn mit einem vierten Strahlteiler ein zweiter s-polarisierter Referenzstrahl vom ersten s-polarisierten Referenzstrahl abgezweigt wird.

Analog dazu ist es von Vorteil, wenn die Meßanordnung
- einen ersten polarisierenden Strahlteiler zum Aufteilen des Laserstrahls in einen ersten s-polarisierten Referenzstrahl und einen ersten p-polarisierten Meßstrahl,
- einen zweiten polarisierenden Strahlteiler zum Ablenken des s-polarisierten Teils von dem von der Probe reflektierten ersten Meßstrahl in den zu den photorefraktiven/elektrooptischen Elementen führenden Zweig,
- einen dritten Strahlteiler zum Abzweigen eines zweiten s-polarisierten Meßstrahls vom ersten s-polarisierten Meßstrahl und
- einen vierten Strahlteiler zum Abzweigen eines zweiten s-polarisierten Referenzstrahls vom ersten s-polarisierten Referenzstrahl umfaßt.
Bei dieser Variante wird also ein Laserstrahl zuerst in einen ersten Referenzstrahl und einen ersten Meßstrahl aufgeteilt. In Folge wird vom ersten Referenzstrahl ein zweiter Referenzstrahl abgezweigt und vom reflektierten ersten Meßstrahl ein zweiter Meßstrahl abgezweigt.

Vorteilhaft ist es weiterhin, wenn der Laserstrahl vor dem ersten polarisierenden Strahlteiler eine erste λ/2-Platte durchläuft, und wenn eine λ/4-Platte von dem auf die Probe gerichteten ersten Meßstrahl beziehungsweise von dem von der Probe reflektierten ersten Meßstrahl durchlaufen wird und dadurch von der p-Polarisierung in eine s-Polarisierung gedreht wird. Analog dazu ist es von Vorteil, wenn die Meßanordnung
- eine in Strahlrichtung des Laserstrahls vor dem ersten polarisierenden Strahlteiler angeordnete erste λ/2-Platte und
- eine in Richtung der Probe benachbart zum zweiten polarisierenden Strahlteiler angeordnete λ/4-Platte umfasst.

Dadurch ist es insbesondere möglich, den ersten und den zweiten Strahlteiler in gleicher Bauweise auszuführen, da der von der Probe reflektierte Meßstrahl durch die λ/4-Platte entsprechend gedreht wird.

Von Vorteil ist es weiterhin,
- wenn der Laserstrahl mit einem ersten polarisierenden Strahlteiler in einen ersten s-polarisierten Referenzstrahl und einen ersten p-polarisierten Meßstrahl aufgeteilt wird,
- wenn der erste p-polarisierten Meßstrahl durch eine Öffnung in einem Spiegel oder über ein in einer Glasplatte integriertes beziehungsweise auf diese aufgesetztes Prisma zur Probe geleitet wird,
- wenn der von der Probe reflektierte erste Meßstrahl mit dem Spiegel oder nach dem Durchtritt durch die Glasplatte mit einem Spiegel in den zu den photorefraktiven/elektro-optischen Elementen führenden Zweig gelenkt wird,
- wenn der reflektierte p-polarisierte Meßstrahl mit Hilfe einer zweiten λ/2-Platte in eine s-Polarisierung gedreht wird,
- wenn mit einem dritten Strahlteiler ein zweiter s-polarisierter Meßstrahl vom ersten s-polarisierten Meßstrahl abgezweigt wird und
- wenn mit einem vierten Strahlteiler ein zweiter s-polarisierter Referenzstrahl vom ersten s-polarisierten Referenzstrahl abgezweigt wird.

Analog ist es von Vorteil, wenn die Meßanordnung umfasst
- einen ersten polarisierenden Strahlteiler zum Aufteilen des Laserstrahls in einen ersten s-polarisierten Referenzstrahl und einen ersten p-polarisierten Meßstrahl,
- a) einen Spiegel mit einer Öffnung, welcher dazu eingerichtet ist, den ersten p-polarisierten Meßstrahl durch die Öffnung im Spiegel zur Probe zu leiten und den von der Probe reflektierten ersten Meßstrahl in den zu den photorefraktiven/elektro-optischen Elementen führenden Zweig zu lenken oder'
   b) eine Glasplatte mit einem integrierten beziehungsweise aufgesetzten Prisma sowie einen Spiegel, wobei die Glasplatte dazu eingerichtet ist, den ersten p-polarisierten Meßstrahl mit Hilfe des Prismas zur Probe zu leiten und den von der Probe reflektierten ersten Meßstrahl zu dem Spiegel passieren zu lassen, welcher dazu eingerichtet ist, den Meßstrahl in den zu den photorefraktiven/elektro-optischen Elementen führenden Zweig zu lenken,
- eine zweite λ/2-Platte zur Drehung der Polarisation des reflektierten p-polarisierten Meßstrahls in eine s-Polarisierung,
- einen dritten Strahlteiler zum Abzweigen eines zweiten s-polarisierten Meßstrahls vom ersten s-polarisierten Meßstrahl und
- einen vierten Strahlteiler zum Abzweigen eines zweiten s-polarisierten Referenzstrahls vom ersten s-polarisierten Referenzstrahl.
Bei dieser Variante ist also anstelle des zweiten polarisierenden Strahlteilers a) ein Spiegel mit einer (zentrischen) Öffnung oder b) eine Glasplatte mit einem integrierten beziehungsweise aufgesetzten Prisma vorgesehen. Im Fall a) tritt der von der Laserquelle kommende Meßstrahl durch die Öffnung im Spiegel und trifft in Folge auf die Probe. Der von der Probe reflektierte Meßstrahl wird in Folge durch den Spiegel zum Großteil (d.h. bis auf den durch das Loch verlorenen Anteil) zu den photorefraktiven/elektro-optischen Elementen abgelenkt. Im Fall b) wird der von der Laserquelle kommende Meßstrahl durch das Prisma auf die Probe gelenkt. Der von der Probe reflektierte Meßstrahl tritt in Folge zum Großteil (d.h. bis auf den durch das Prisma verlorenen Anteil) durch die Glasplatte und wird mit Hilfe eines Spiegels zu den photorefraktiven/elektro-optischen Elementen abgelenkt.

Vorteilhaft ist es zudem, wenn die photorefraktiven/elektro-optischen Elemente als photorefraktive/elektro-optische Kristalle ausgebildet sind, welche insbesondere aus Bismut-Silizium-Oxid (BSO) bestehen, oder als photorefraktive/elektro-optische Polymere ausgebildet sind. Kristalle aus Bismut-Silizium-Oxid sind hervorragend geeignet für eine Detektionslaser-Wellenlänge von 532nm, sind relativ leicht verfügbar, weswegen die vorgestellte Anordnung gut in die Praxis umgesetzt werden kann.

Von Vorteil ist es schließlich, wenn die Anordnung einen auf die Probe ausrichtbaren Anregungslaser zur Erzeugung einer Ultraschallwelle umfasst. Auf diese Weise kann die Probe berührungslos zum Schwingen gebracht werden.

An dieser Stelle wird angemerkt, dass sich die verschiedenen Varianten des Verfahrens sowie die daraus resultierenden Vorteile sinngemäß auch auf die vorgestellte Meßanordnung angewendet werden können und umgekehrt.

Zum besseren Verständnis der Erfindung wird diese anhand der nachfolgenden Figuren näher erläutert. Es zeigen:
- Fig. 1: eine schematisch dargestellte Anordnung zur Laser-optischen Erfassung einer Oberflächenbewegung einer Probe;
- Fig. 2: eine Variante der in der Fig. 1 dargestellten Anordnung mit einem Spiegel mit einer Öffnung und
- Fig. 3: eine Variante der in der Fig. 1 dargestellten Anordnung mit einer Glasplatte mit einem aufgesetzten/integrierten Prisma.

Einführend sei festgehalten, dass gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus dem gezeigten und beschriebenen Ausführungsbeispiel für sich eigenständige, erfinderische oder erfindungsgemäße Lösungen darstellen.

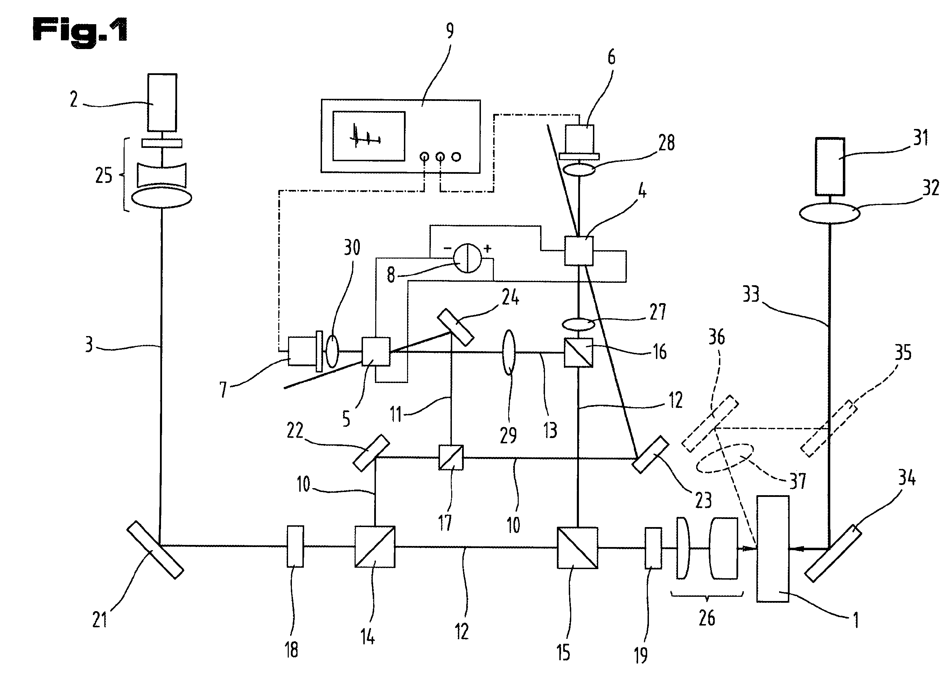

Fig. 1 zeigt eine Anordnung zur Laser-optischen Erfassung einer Oberflächenbewegung einer Probe 1, umfassend
- eine Laserquelle 2, welche einen Laserstrahl 3 erzeugt,
- ein erstes photorefraktives/elektro-optisches Element 4,
- ein zweites photorefraktives/elektro-optisches Element 5,
- Mittel 6 zum Umwandeln des aus dem ersten photorefraktiven/elektro-optischen Element 4 austretenden Lichts in ein erstes elektrisches Signal,
- Mittel 7 zum Umwandeln des aus dem zweiten photorefraktiven/elektro-optischen Element 5 austretenden Lichts in ein zweites elektrisches Signal,
- Mittel 8 zum Anlegen zueinander inverser Spannungen an das erste und zweite photorefraktive/elektro-optische Element 4, 5 und
- Mittel 9 zum Auswerten des Differenzsignals zwischen dem ersten elektrischen Signal und dem zweiten elektrischen Signal.

Die beiden photorefraktiven/elektro-optischen Elemente 4 und 5 sind dabei vorzugsweise als photorefraktive/elektro-optische Kristalle ausgebildet, welche insbesondere aus Bismut-Silizium-Oxid (für eine Detektionslaser-Wellenlänge von 532nm) bestehen. Die beiden photorefraktiven/elektro-optischen Elemente 4 und 5 können aber beispielsweise auch aus einem photorefraktiven Polymer hergestellt sein.

### Darüber hinaus umfasst die Anordnung

- Mittel zum Überlagern eines aus dem Laserstrahl 3 erhaltenen ersten Referenzstrahls 10 mit einem von diesem Laserstrahl 3 erhaltenen, auf die Probe 1 ausgerichteten und von dieser reflektierten ersten Meßstrahls 12 in dem ersten photorefraktiven/elektro-optischen Element 4,
- Mittel zum Erzeugen eines zum ersten Referenzstrahl 10 im Wesentlichen identen zweiten Referenzstrahls 11,
- Mittel zum Erzeugen eines zum ersten Meßstrahl 12 im Wesentlichen identen zweiten Meßstrahls 13 und
- Mittel zum Überlagern des zweiten Referenzstrahls 11 mit dem zweiten Meßstrahl 13 in einem zweiten photorefraktiven/elektro-optischen Element 5.

Dazu wird der vom Laser 2 kommende Laserstrahl 3 in einen ersten und einen zweiten Referenzstrahl 10, 11 sowie einen auf eine Probe 1 ausrichtbaren ersten Meßstrahl 12 aufgeteilt und ein zweiter Meßstrahl 13 von dem von der Probe 1 reflektierten ersten Meßstrahl 12 abgezweigt.

### Konkret umfaßt die Anordnung dazu

- einen ersten polarisierenden Strahlteiler 14 zum Aufteilen des Laserstrahls 3 in einen ersten s-polarisierten Referenzstrahl 10 und einen ersten p-polarisierten Meßstrahl 13,
- einen zweiten polarisierenden Strahlteiler 15 zum Ablenken des s-polarisierten Teils von dem von der Probe 1 reflektierten ersten Meßstrahl 12 in den zu den photorefraktiven/elektro-optischen Elementen 4, 5 führenden Zweig,
- einen dritten Strahlteiler 16 zum Abzweigen des zweiten s-polarisierten Meßstrahls 13 vom ersten s-polarisierten Meßstrahl 12 und
- einen vierten Strahlteiler 17 zum Abzweigen des zweiten s-polarisierten Referenzstrahls 11 vom ersten s-polarisierten Referenzstrahl 10.

Das Teilungsverhältnis der Strahlteiler 16..17 beträgt dabei vorzugsweise 50:50.

### Weiterhin umfaßt die Anordnung

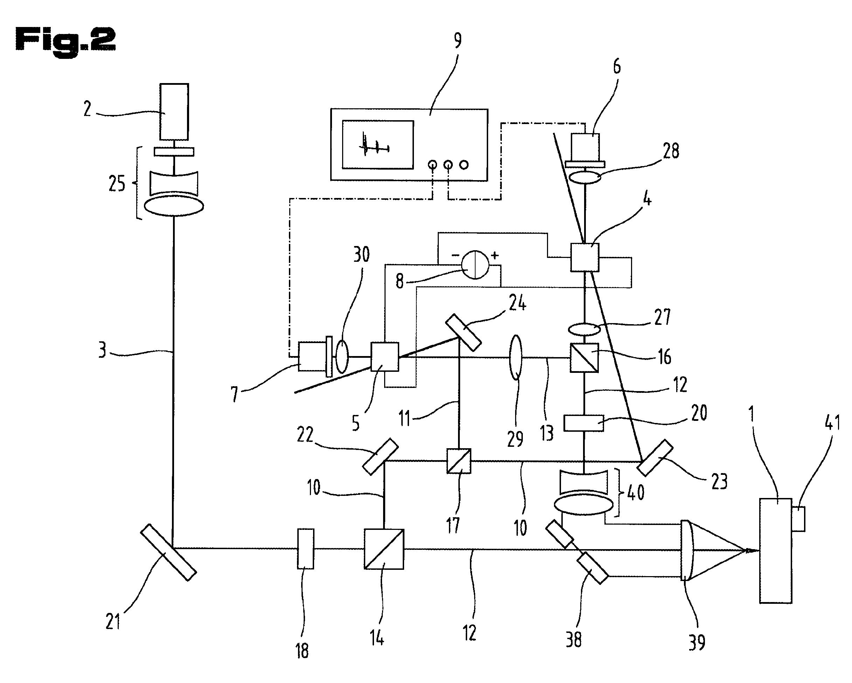

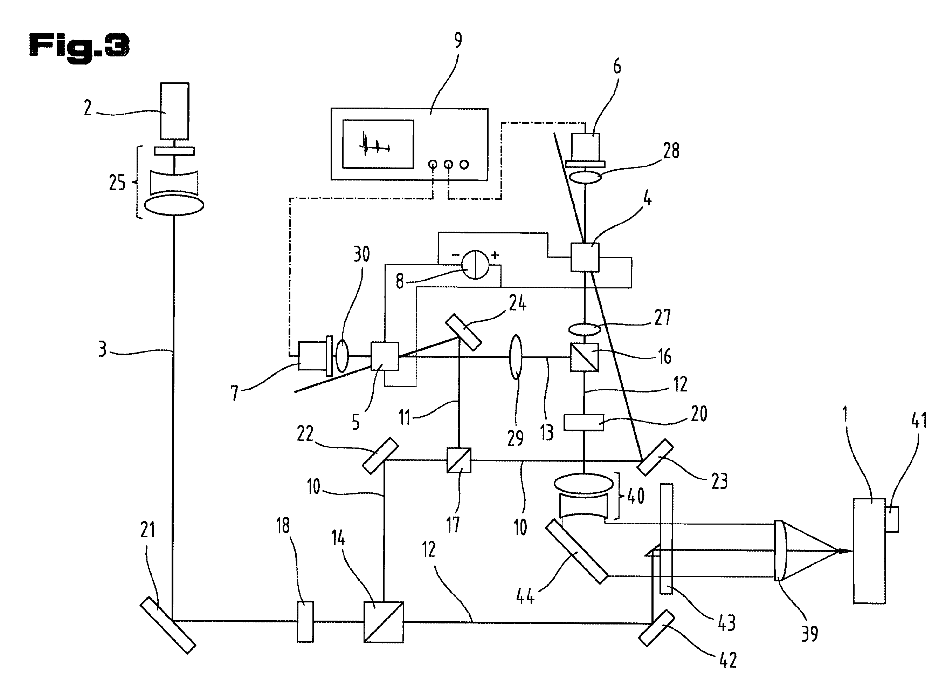

- eine in Strahlrichtung des Laserstrahls 3 vor dem ersten polarisierenden Strahlteiler 14 angeordnete erste λ/2-Platte 18,
- eine in Richtung der Probe 1 benachbart zum zweiten polarisierenden Strahlteiler 15 angeordnete λ/4-Platte 19 und
- eine in Richtung der photorefraktiven/elektro-optischen Elemente 4, 5 benachbart zum zweiten polarisierenden Strahlteiler 15 angeordnete zweite λ/2-Platte 20 welche in den
Figuren 2 und 3 beinhaltet ist, um die Polarisation des Meßstrahls 12 zu drehen.

Außerdem sind in der Anordnung noch diverse Umlenkspiegel 21..24, sowie diverse optische Linsen 25..30 enthalten.

Schließlich ist in der Fig. 1 ein optionaler Anregungslaser 31 dargestellt, dessen Laserstrahl 33 durch die Linse 32 läuft und mit Hilfe eines Spiegels 34 auf die Probe 1 gerichtet ist, um in dieser eine Ultraschallwelle zu erzeugen.

Die Funktion der Anordnung ist nun wie folgt:

Der Laserstrahl 3 tritt ausgehend von der Laserquelle 2 durch ein Linsensystem 25 und wird dann mit Hilfe des Spiegels 21 auf die erste λ/2-Platte 18 abgelenkt. Diese dreht die Polarisationsrichtung des Laserstrahls 2, der in Folge auf den ersten polarisierenden Strahlteiler 14 trifft. Dort wird der Laserstrahl 2 in einen ersten s-polarisierten Referenzstrahl 10 und einen ersten p-polarisierten Meßstrahl 12 aufgeteilt.

Der p-polarisierten Meßstrahl 12 durchläuft nun den zweiten polarisierenden Strahlteiler 15, die zweite λ/4-Platte 19 sowie ein Linsensystem 26 und trifft dann auf die Probe 1. Diese kann wie hier dargestellt von dem auf die Probe 1 gerichteten Anregungslaser 31 in an sich bekannter Weise in Schwingung versetzt werden. Denkbar ist natürlich auch, dass die Probe 1 auf andere Weise zur Schwingung angeregt wird.

Aufgrund des Doppler-Effekts verschiebt sich durch die Geschwindigkeit der Oberflächenbewegung der Probe 1 nun die Frequenz des zurückgestreuten ersten Meßstrahls 12. Zusätzlich kommt es zu einer Phasenverschiebung des zurückgestreuten ersten Meßstrahls 12 durch die Oberflächenbewegung.

Dieser durchläuft wiederum das Linsensystem 26, die zweite λ/4-Platte 19 und trifft anschließend auf den zweiten polarisierenden Strahlteiler 15, wo der s-polarisierte Teil des ersten Meßstrahls 12 um 90° abgelenkt wird. Durch den zweifachen Durchlauf durch die λ/4-Platte 19 wird der zurückgestreute Meßstrahl 12 von der p-Polarisierung in eine s-Polarisierung gedreht. Der Meßstrahl 12 trifft im Anschluss auf einen dritten Strahlteiler 16, in dem der zweite Meßstrahl 13 abgezweigt wird.

Der erste Referenzstrahl 10 wird mit Hilfe des Spiegels 22 auf den vierten Strahlteiler 17 gelenkt. Dort wird der zweite s-polarisierte Referenzstrahl 11 vom ersten s-polarisierten Referenzstrahl 10 abgezweigt.

Der erste Meßstrahl 12 verläuft nun durch die Linse 27 in das erste photorefraktive/elektrooptische Element 4. Der erste Referenzstrahl 10 wird über den Spiegel 23 ebenfalls in das photorefraktive/elektro-optische Element 4 gelenkt und dort mit dem Meßstrahl 12 überlagert, beziehungsweise interferiert dort mit diesem. Aufgrund des elektro-optischen Pockels-Effekts beziehungsweise aufgrund des Kerr-Effekts können mit Hilfe eines elektrischen Felds Doppelbrechung in dem photorefraktiven/elektro-optischen Element 4 erzeugt werden. Dieses elektrische Feld wird mit Hilfe der Spannungsquelle 8 erzeugt.

Der resultierende Meßstrahl 12 verläuft nun durch die Linse 28 und wird schließlich in der ersten Photozelle 6 in ein erstes elektrisches Signal umgewandelt, das im Oszilloskop 9 sichtbar gemacht werden kann.

Der zweite Meßstrahl 13 verläuft durch die Linse 29 und trifft auf das zweite photorefraktive/elektro-optische Element 5. Der zweite Referenzstrahl 11 wird über den Spiegel 24 ebenfalls in das zweite photorefraktive/elektro-optische Element 25 gelenkt und dort mit dem zweiten Meßstrahl 13 überlagert, beziehungsweise interferiert dort mit diesem. Der resultierende Meßstrahl 13 verläuft durch die Linse 30 und wird schließlich in der zweiten Photozelle 7 in ein zweites elektrisches Signal umgewandelt, das im Oszilloskop 9 sichtbar gemacht werden kann.

Der zweite Meßstrahl 13 und der zweite Referenzstrahl 11 werden in völlig analoger Weise behandelt wie der erste Meßstrahl 12 und der erste Referenzstrahl 10, allerdings mit dem Unterschied, dass das zweite photorefraktive/elektro-optische Element 5 mit einer Spannung beaufschlagt wird, welche invers zu der Spannung ist, die an das erste photorefraktive/elektrooptische Element 4 angelegt wird.

Durch die zueinander inversen Spannungen an den photorefraktiven/elektro-optischen Elementen 4, 5 sind die aus den photorefraktiven/elektro-optischen Elementen 4, 5 erhaltenen optischen Signale und damit auch die von den Photozellen 6 und 7 erzeugten Signale zueinander invers. Im Oszilloskop 9 wird nun eine Differenz zwischen dem ersten und dem zweiten elektrischen Signal gebildet. Dadurch wird einerseits die Signalstärke des Meßsignals verdoppelt, auf der anderen Seite werden Störungen, die bei der Umwandlung des optischen Signals in ein elektrisches Signal entstehen, eliminiert. Auf diese Weise kann die Laser-optischen Erfassung einer Oberflächenbewegung einer Probe deutlich verbessert werden.

An dieser Stelle wird angemerkt, dass es für die Laser-optische Erfassung der Oberflächenbewegung der Probe 1 nicht unbedingt einer Auswertung der in den beiden photorefraktiven/elektro-optischen Elementen 4, 5 entstehenden Hologramme bedarf. Da eine Phasenverschiebung zwischen einem Referenzstrahl 10, 11 und einem Meßstrahl 12, 13 zu einer Amplitudenmodulation des aus dem betreffenden photorefraktiven/elektro-optischen Element 4, 5 austretenden Meßstrahl 12, 13 respektive zu einer Intensitätsverschiebung zwischen den aus dem photorefraktiven/elektro-optischen Element 4, 5 austretenden Meßstrahl 12, 13 und dem einem Referenzstrahl 10, 11 kommt, reicht eine Messung der Intensität des austretenden Meßstrahl 12, 13 aus. Die Photoelemente 5, 6 können daher als Photodioden ausgebildet sein, mit denen die genannte Intensitätsveränderung des detektierten Meßstrahls 12, 13 erfasst werden kann.

In der Fig. 1 ist ein optionaler Anregungslaser 31 dargestellt, dessen Laserstrahl 32 durch die Linse 33 läuft und mit Hilfe eines Spiegels 34 auf die Probe 1 gerichtet ist, um in dieser eine Ultraschallwelle zu erzeugen.

In einer Variante der in der Fig. 1 dargestellten Anordnung wird die Probe 1 nicht an ihrer Rückseite, sondern an ihrer dem Meßstrahl 12 zugewandten Seite angeregt. Dazu wird der der Laserstrahl 33 des Anregungslasers 31 von einen Spiegel 35 auf einen Spiegel 36 gerichtet. Von dort verläuft der Lasterstrahl 33 durch eine Linse 37 und trifft schließlich auf die Probe 1, wo er in der bereits beschriebenen Weise eine Ultraschallwelle erzeugt. Die Linse 32 kann dabei zugunsten der Linse 37 entfallen (siehe strichlierter Strahlengang).

Generell ist die Anregung der Probe 1 mit Hilfe des Anregungslasers 31 nicht zwingend. Anstelle des Anregungslasers 31 kann auch ein anderer Schwinggeber vorgesehen sein, beispielsweise ein Piezo-Schwinggeber (siehe auch Fig. 2). Schwingt die Probe 1 von selbst, können gesonderte Mittel zur Schwingungserzeugung überhaupt entfallen.

Denkbar ist in einer weiteren Variante auch, dass die Anordnung nur die linke Linse der Linsengruppe 26 umfasst. Weiterhin ist es möglich, anstelle der zweiten λ/2-Platte allgemein einen Polarisationssteller 20 vorzusehen, mit dem die Polarisationsrichtung des Meßstrahls 12 beliebig gedreht werden kann.

Hinsichtlich der Polarisationsrichtungen ist generell anzumerken, dass die in der Fig. 1 dargestellte, spezielle Ausrichtung der Polarisation der Referenzstrahlen 10, 11 und Meßstrahlen 12, 13 für die Funktion der Anordnung nicht unbedingt nötig ist. Die in den photorefraktiven/elektro-optischen Elementen 4, 5 gekreuzten Referenzstrahlen 10, 11 und Meßstrahlen 12, 13 können auch andere Polarisierungen aufweisen. Demzufolge können auch andere Elemente zur Beeinflussung der Polarisierung vorgesehen sein.

Fig. 2 zeigt nun eine etwas modifizierte Variante der in der Fig. 1 dargestellten Anordnung. Anstelle des zweiten polarisierenden Strahlteilers 15 ist in diesem Beispiel ein Spiegel 38 mit einer (zentrischen) Öffnung vorgesehen. Der vom ersten polarisierenden Strahlteiler 14 kommende Meßstrahl 12 passiert das Loch im Spiegel 38, tritt durch die Linse 39 und trifft schließlich auf die Probe 1. Der reflektierte (und gestreute) Meßstrahl 1 wird mit Hilfe der Linse 39 kollimiert und (zum Großteil) vom Spiegel 38 auf das Linsensystem 40 geleitet, wo er wieder gebündelt und zu den photorefraktiven/elektro-optischen Elementen 4, 5 weitergeleitet wird.

Fig. 3 zeigt eine weitere Variante einer Anordnung zur Laser-optischen Erfassung einer Oberflächenbewegung einer Probe 1, welche der in der Fig. 2 dargestellten Anordnung sehr ähnlich ist. Abweichend zu der Fig. 2 ist bei dieser Variante ein (voller) Spiegel 42 vorgesehen, welcher den vom ersten polarisierenden Strahlteiler 14 kommenden Meßstrahl 12 auf eine Glasplatte 43 mit einem integrierten beziehungsweise aufgesetzten Prisma richtet. Durch das Prisma wird der Meßstrahl 12 über die Linse 39 auf die Probe 1 geworfen. Der reflektierte (und gestreute) Meßstrahl 1 wird mit Hilfe der Linse 39 kollimiert und passiert (zum Großteil) die Glasplatte 43. Von dort läuft er weiter auf einen Umlenkspiegel 44, welcher den Meßstrah112 auf das Linsensystem 40 leitet, wo er wieder gebündelt und zu den photorefraktiven/elektro-optischen Elementen 4, 5 weitergeleitet wird.

Die Ausführungsbeispiele zeigen mögliche Ausführungsvarianten einer erfindungsgemäßen Anordnung zur Laser-optischen Erfassung einer Oberflächenbewegung einer Probe 1, wobei an dieser Stelle bemerkt sei, dass die Erfindung nicht auf die speziell dargestellten Ausführungsvarianten derselben eingeschränkt ist.

Insbesondere wird festgehalten, dass die dargestellten Anordnungen in der Realität auch mehr oder weniger Bestandteile als dargestellt umfassen können.

Die den eigenständigen erfinderischen Lösungen zugrundeliegende Aufgabe kann der Beschreibung entnommen werden.

**Bezugszeichenaufstellung**

| | | | |
|---|---|---|---|
| 1 | Probe | 34 | Umlenkspiegel |
| 2 | Laserquelle | 35 | Umlenkspiegel |
| 3 | Laserstrahl | | |
| 4 | erstes photorefraktives/elektro-optisches Element | 36 | Umlenkspiegel |
| | | 37 | optische Linse |
| 5 | zweites photorefraktives/elektro-optisches Element | 38 | Spiegel mit Öffnung/Loch |
| | | 39 | optische Linse |
| | | 40 | optische Linse |
| 6 | erstes Photoelement | | |
| 7 | zweites Photoelement | 41 | Piezo-Schwinggeber |
| 8 | Spannungsquelle | 42 | Umlenkspiegel |
| 9 | Oszilloskop | 43 | Glasplatte mit integrier-tem/aufgesetzten Prisma |
| 10 | erster Referenzstrahl | | |
| | | 44 | Umlenkspiegel |
| 11 | zweiter Referenzstrahl | | |
| 12 | erster Meßstrahl | | |
| 13 | zweiter Meßstrahl | | |
| 14 | erster polarisierender Strahlteiler | | |
| 15 | zweiter polarisierender Strahlteiler | | |
| | | | |
| 16 | dritter Strahlteiler | | |
| 17 | vierter Strahlteiler | | |
| 18 | erste λ/2-Platte | | |
| 19 | λ/4-Platte | | |
| 20 | zweite λ/2-Platte/Polarisationssteller | | |
| | | | |
| 21 | Umlenkspiegel | | |
| 22 | Umlenkspiegel | | |
| 23 | Umlenkspiegel | | |
| 24 | Umlenkspiegel | | |
| 25 | optische Linse | | |
| | | | |
| 26 | optische Linse | | |
| 27 | optische Linse | | |
| 28 | optische Linse | | |
| 29 | optische Linse | | |
| 30 | optische Linse | | |
| | | | |
| 31 | Anregungslaser | | |
| 32 | optische Linse | | |
| 33 | Laserstrahl des Anregungslasers | | |

## Patentansprüche

1. Verfahren zur Laser-optischen Erfassung einer Oberflächenbewegung einer Probe (1), bei dem ein aus einem Laserstrahl (3) erhaltener erster Referenzstrahl (10) mit einem von dem besagten Laserstrahl (3) erhaltenen, auf die Probe (1) ausgerichteten und von dieser reflektierten ersten Meßstrahl (12) in einem ersten photorefraktiven/elektro-optischen Element (4) überlagert wird und das aus dem ersten photorefraktiven/elektro-optischen Element (4) austretende Licht in ein erstes elektrisches Signal umgewandelt und anschließend ausgewertet wird,
**dadurch gekennzeichnet, dass**
ein zum ersten Referenzstrahl (10) im Wesentlichen identer zweiter Referenzstrahl (11) mit einem zum ersten Meßstrahl (12) im Wesentlichen identen zweiten Meßstrahl (13) in einem zweiten photorefraktiven/elektro-optischen Element (5) überlagert wird und das aus dem zweiten photorefraktiven/elektro-optischen Element (5) austretende Licht in ein zweites elektrisches Signal umgewandelt wird, das vor der Auswertung vom ersten elektrischen Signal subtrahiert wird, wobei an die beiden photorefraktiven/elektro-optischen Elemente (4, 5) zueinander inverse Spannungen angelegt werden.

2. Verfahren nach Anspruch 1, **dadurch gekennzeichnet, dass** der Laserstrahl (3) in einen ersten und einen zweiten Referenzstrahl (10, 11) sowie einen auf eine Probe (1) ausrichtbaren ersten Meßstrahl (12) aufgeteilt wird und von dem von der Probe (1) reflektierten ersten Meßstrahl (12) ein zweiter Meßstrahl (13) abgezweigt wird.

3. Verfahren nach Anspruch 2, **dadurch gekennzeichnet,**
- **dass** der Laserstrahl (3) mit einem ersten polarisierenden Strahlteiler (14) in einen ersten s-polarisierten Referenzstrahl (10) und einen ersten p-polarisierten Meßstrahl (12) aufgeteilt wird,
- **dass** mit einem zweiten polarisierenden Strahlteiler (15) von dem von der Probe (1) reflektierten ersten Meßstrahl (12) der s-polarisierte Teil in den zu den photorefraktiven/elektro-optischen Elementen (4, 5) führenden Zweig abgelenkt wird,
- **dass** mit einem dritten Strahlteiler (16) ein zweiter s-polarisierter Meßstrahl (13) vom ersten s-polarisierten Meßstrahl (12) abgezweigt wird und
- **dass** mit einem vierten Strahlteiler (17) ein zweiter s-polarisierter Referenzstrahl (11) vom ersten s-polarisierten Referenzstrahl (10) abgezweigt wird.

4. Verfahren nach Anspruch 3, **dadurch gekennzeichnet, dass** der Laserstrahl (3) vor dem ersten polarisierenden Strahlteiler (14) eine erste λ/2-Platte (18) durchläuft und dass eine λ/4-Platte (19) von dem auf die Probe (1) gerichteten ersten Meßstrahl (12) beziehungsweise von dem von der Probe (1) reflektierten ersten Meßstrahl (12) durchlaufen wird.

5. Verfahren nach Anspruch 2, **dadurch gekennzeichnet,**
- **dass** der Laserstrahl (3) mit einem ersten polarisierenden Strahlteiler (14) in einen ersten s-polarisierten Referenzstrahl (10) und einen ersten p-polarisierten Meßstrahl (12) aufgeteilt wird,
- **dass** der erste p-polarisierte Meßstrahl (12) durch eine Öffnung in einem Spiegel (38) oder über ein in einer Glasplatte (43) integriertes beziehungsweise auf diese aufgesetztes Prisma zur Probe (1) geleitet wird,
- **dass** der von der Probe (1) reflektierte erste Meßstrahl (12) mit dem Spiegel (38) oder nach dem Durchtritt durch die Glasplatte (43) mit einem Spiegel (44) in den zu den photorefraktiven/elektro-optischen Elementen (4, 5) führenden Zweig gelenkt wird,
- **dass** der erste Meßstrahl (12) eine zweite λ/2-Platte (20) durchläuft,
- **dass** mit einem dritten Strahlteiler (16) ein zweiter s-polarisierter Meßstrahl (13) vom ersten s-polarisierten Meßstrahl (12) abgezweigt wird und
- **dass** mit einem vierten Strahlteiler (17) ein zweiter s-polarisierter Referenzstrahl (11) vom ersten s-polarisierten Referenzstrahl (10) abgezweigt wird.

6. Anordnung zur Laser-optischen Erfassung einer Oberflächenbewegung einer Probe (1), umfassend
- eine Laserquelle (2), welche einen Laserstrahl (3) erzeugt,
- ein erstes photorefraktives/elektro-optisches Element (4),
- Mittel zum Überlagern eines aus einem Laserstrahl (3) erhaltenen ersten Referenzstrahls (10) mit einem von diesem Laserstrahl (3) erhaltenen, auf die Probe (1) ausgerichteten und von der Probe (1) reflektierten ersten Meßstrahls (12) in dem ersten photorefraktiven/elektro-optischen Element (4),
- Mittel zum Umwandeln des aus dem ersten photorefraktiven/elektro-optischen Element (4) austretenden Lichts in ein erstes elektrisches Signal,
**gekennzeichnet durch**
- ein zweites photorefraktives/elektro-optisches Element (5),
Mittel (8) zum Anlegen zueinander inverser Spannungen an das erste und das zweite photorefraktive/elektro-optische Element (4, 5),
- Mittel zum Erzeugen eines zum ersten Referenzstrahl (10) im Wesentlichen identen zweiten Referenzstrahls (11),
- Mittel zum Erzeugen eines zum ersten Meßstrahl (12) im Wesentlichen identen zweiten Meßstrahls (13),
- Mittel zum Überlagern des zweiten Referenzstrahls (11) mit dem zweiten Meßstrahl (13) in dem zweiten photorefraktiven/elektro-optischen Element (5),
- Mittel zum Umwandeln des aus dem zweiten photorefraktiven/elektro-optischen Element (5) austretenden Lichts in ein zweites elektrisches Signal und
- Mittel (9) zum Auswerten des Differenzsignals zwischen dem ersten elektrischen Signal und dem zweiten elektrischen Signal.

7. Anordnung nach Anspruch 6, **gekennzeichnet durch**
- Mittel zum Aufteilen des Laserstrahls (3) in einen ersten und einen zweiten Referenzstrahl (10, 11) sowie einen auf eine Probe (1) ausrichtbaren ersten Meßstrahl (12) und
- Mittel zum Abzweigen eines zweiten Meßstrahls (13) von dem von der Probe (1) reflektierten ersten Meßstrahl (12).

8. Anordnung nach Anspruch 7, **gekennzeichnet durch**
- einen ersten polarisierenden Strahlteiler (14) zum Aufteilen des Laserstrahls (3) in einen ersten s-polarisierten Referenzstrahl (10) und einen ersten p-polarisierten Meßstrahl (12),
- einen zweiten polarisierenden Strahlteiler (15) zum Ablenken des s-polarisierten Teils von dem von der Probe (1) reflektierten ersten Meßstrahl (12) in den zu den photorefraktiven/elektro-optischen Elementen (4, 5) führenden Zweig,
- einen dritten Strahlteiler (16) zum Abzweigen eines zweiten s-polarisierten Meßstrahls (13) vom ersten s-polarisierten Meßstrahl (12) und
- einen vierten Strahlteiler (17) zum Abzweigen eines zweiten s-polarisierten Referenzstrahls (11) vom ersten s-polarisierten Referenzstrahl (10).

9. Anordnung nach einem der Ansprüche 6 bis 8, **dadurch gekennzeichnet, dass** die photorefraktiven/elektro-optischen Elemente (4, 5) als photorefraktive/elektro-optische Kristalle oder photorefraktive/elektro-optische Polymere ausgebildet sind.

10. Anordnung nach einem der Ansprüche 6 bis 9, **gekennzeichnet durch** einen auf die Probe (1) ausrichtbaren Anregungslaser (31) zur Erzeugung einer Ultraschallwelle.

## Claims

1. A method for laser-optical detection of a surface movement of a sample (1), whereby a first reference beam (10) obtained from a laser beam (3) is superimposed with a first measurement beam (12) obtained from said laser beam (3) directed onto the sample (1) and reflected by the latter in a first photorefractive/electro-optical element (4), and the light emerging from the first photorefractive/electro-optical element (4) is converted into a first electric signal and then evaluated,
**characterized in that**
a second reference beam (11) substantially identical to the first reference beam (10) is superimposed with a second measurement beam (13) substantially identical to the first measurement beam (12) in a second photorefractive/electro-optical element (5) and the light emerging from the second photorefractive/electro-optical element (5) is converted into a second electric signal that is subtracted from the first electric signal prior to the evaluation, wherein mutually inverse voltages are applied to the two photorefractive/electro-optical elements (4, 5).

2. The method according to claim 1, **characterized in that** the laser beam (3) is split into a first and a second reference beam (10, 11) as well as a first measurement beam (12) which can be directed onto a sample (1), and a second measurement beam (13) is branched off from the first measurement beam (12) reflected by the sample (1).

3. The method according to claim 2, **characterized in that**
- the laser beam (3) is split by means of a first polarizing beam splitter (14) into a first s-polarized reference beam (10) and a first p-polarized measurement beam (12),
- the s-polarized part of the first measurement beam (12) reflected by the sample (1) is deflected by means of a second polarizing beam splitter (15) into the branch leading to the photorefractive/electro-optical elements (4, 5),
- a second s-polarized measurement beam (13) is branched off from the first s-polarized measurement beam (12) by means of a third beam splitter (16) and
- a second s-polarized reference beam (11) is branched off from the first s-polarized reference beam (10) by means of a fourth beam splitter (17).

4. The method according to claim 3, **characterized in that** the laser beam (3) passes through a first λ/2 plate (18) upstream of the first polarizing beam splitter (14) and that the first measurement beam (12) directed onto the sample (1) or respectively the first measurement beam (12) reflected by the sample (1) passes through a λ/4 plate (19).

5. The method according to claim 2, **characterized in that**
- the laser beam (3) is split by means of a first polarizing beam splitter (14) into a first s-polarized reference beam (10) and a first p-polarized measurement beam (12),
- the first p-polarized measurement beam (12) is directed to the sample (1) through an aperture in a mirror (38) or via a prism integrated in or respectively mounted on a glass plate (43),
- the first measurement beam (12) reflected by the sample (1) is deflected by the mirror (38) or, having passed through the glass plate (43), by a mirror (44) into the branch leading to the photorefractive/electro-optical elements (4, 5),
- the first measurement beam (12) passes through a second λ/2 plate (20),
- a second s-polarized measurement beam (13) is branched off from the first s-polarized measurement beam (12) by means of a third beam splitter (16) and
- a second s-polarized reference beam (11) is branched off from the first s-polarized reference beam (10) by means of a fourth beam splitter (17).

6. An arrangement for laser-optical detection of a surface movement of a sample (1), comprising
- a laser source (2) which generates a laser beam (3),
- a first photorefractive/electro-optical element (4),
- means for superimposing a first reference beam (10) obtained from a laser beam (3) with a first measurement beam (12) obtained from this laser beam (3) directed onto the sample (1) and reflected by the sample (1) in the first photorefractive/electro-optical element (4),
- means for converting the light emerging from the first photorefractive/electro-optical element (4) into a first electric signal,
**characterized by**
- a second photorefractive/electro-optical element (5),
- means (8) for applying mutually inverse voltages to the first and the second photorefractive/electro-optical element (4, 5),
- means for generating a second reference beam (11) substantially identical to the first reference beam (10),
- means for generating a second measurement beam (13) substantially identical to the first measurement beam (12),
- means for superimposing the second reference beam (11) with the second measurement beam (13) in the second photorefractive/electro-optical element (5),
- means for converting the light emerging from the second photorefractive/electro-optical element (5) into a second electric signal and
- means (9) for evaluating the differential signal between the first electric signal and the second electric signal.

7. The arrangement according to claim 6, **characterized by**
- means for splitting the laser beam (3) into a first and a second reference beam (10, 11) as well as a first measurement beam (12) which can be directed onto a sample (1) and
- means for branching a second measurement beam (13) off from the first measurement beam (12) reflected by the sample (1).

8. The arrangement according to claim 7, **characterized by**
- a first polarizing beam splitter (14) for splitting the laser beam (3) into a first s-polarized reference beam (10) and a first p-polarized measurement beam (12),
- a second polarizing beam splitter (15) for deflecting the s-polarized part of the first measurement beam (12) reflected by the sample (1) into the branch leading to the photorefractive/electro-optical elements (4, 5),
- a third beam splitter (16) for branching a second s-polarized measurement beam (13) off from the first s-polarized measurement beam (12) and
- a fourth beam splitter (17) for branching a second s-polarized reference beam (11) off from the first s-polarized reference beam (10).

9. The arrangement according to one of claims 6 to 8, **characterized in that** the photorefractive/electro-optical elements (4, 5) are provided in the form of photorefractive/electro-optical crystals or photorefractive/electro-optical polymers.

10. The arrangement according to one of claims 6 to 9, **characterized by** an excitation laser (31) which can be directed onto the sample (1) in order to generate an ultrasonic wave.

## Revendications

1. Procédé pour la détection optique par laser d'un mouvement de la surface supérieure d'un échantillon (1), dans lequel un premier faisceau de référence (10) obtenu à partir d'un faisceau laser (3) est superposé avec un premier faisceau de mesure (12) obtenu à partir dudit faisceau laser (3) dirigé jusque sur l'échantillon (1) et réfléchi par ce dernier dans un premier élément photoréfractif/électro-optique (4), et la lumière émergeant du premier élément photoréfractif/électro-optique (4) est convertie en un premier signal électrique, puis est évaluée,
**caractérisé en ce que**
un deuxième faisceau de référence (11) sensiblement identique au premier faisceau de référence (10) est superposé avec un deuxième faisceau de mesure (13) sensiblement identique au premier faisceau de mesure (12) dans un deuxième élément photoréfractif/électro-optique (5), et la lumière émergeant du deuxième élément photoréfractif/électro-optique (5) est convertie en un deuxième signal électrique qui est soustrait du premier signal électrique avant l'évaluation, de sorte que des tensions mutuellement inverses sont appliquées aux deux éléments photoréfractifs/électro-optiques (4, 5).

2. Procédé selon la revendication 1, **caractérisé en ce que** le faisceau laser (3) est divisé en des premier et deuxième faisceaux de référence (10, 11), de même qu'un premier faisceau de mesure (12) qui peut être dirigé jusque sur un échantillon (1), et un deuxième faisceau de mesure (13) est dévié du premier faisceau de mesure (12) réfléchi par l'échantillon (1).

3. Procédé selon la revendication 2, **caractérisé en ce que**
- le faisceau laser (3) est séparé par l'intermédiaire d'un premier séparateur de faisceau polarisant (14) en un premier faisceau de référence s-polarisé (10) et un premier faisceau de mesure p-polarisé (12),
- la partie s-polarisée du premier faisceau de mesure (12) réfléchi par l'échantillon (1) est déviée par l'intermédiaire d'un deuxième séparateur de faisceau polarisant (15) dans la branche menant aux éléments photoréfractifs/électro-optiques (4, 5),
- un deuxième faisceau de mesure s-polarisé (13) est dévié du premier faisceau de mesure s-polarisé (12) par l'intermédiaire d'un troisième séparateur de faisceau (16), et
- un deuxième faisceau de référence s-polarisé (11) est dévié du premier faisceau de référence s-polarisé (10) par l'intermédiaire d'un quatrième séparateur de faisceau (17).

4. Procédé selon la revendication 3, **caractérisé en ce que** le faisceau laser (3), avant que le premier séparateur de faisceau polarisant (14), passe à travers une première plaque λ/2 (18) en amont du premier séparateur de faisceau polarisant (14), et le premier faisceau de mesure (12) dirigé sur l'échantillon (1), ou plutôt le premier faisceau de mesure (12) réfléchi par l'échantillon (1), passe à travers une plaque λ/4 (19).

5. Procédé selon la revendication 2, **caractérisé en ce que**
- le faisceau laser (3) est séparé par l'intermédiaire d'un premier séparateur de faisceau polarisant (14) en un premier faisceau de référence s-polarisé (10) et un premier faisceau de mesure p-polarisé (12),
- le premier faisceau de mesure p-polarisé (12) est dirigé jusque sur l'échantillon (1) à travers une ouverture dans un miroir (38) ou via un prisme intégré ou monté sur une plaque de verre (43),
- le premier faisceau de mesure (12) réfléchi par l'échantillon (1) est dévié par le miroir (38) ou, étant passé à travers la plaque de verre (43), par un miroir (44) dans la branche menant aux éléments photoréfractifs/électro-optiques (4, 5),
- le premier faisceau de mesure (12) passe à travers une seconde plaque λ/2 (20),
- un deuxième faisceau de mesure s-polarisé (13) est dévié du premier faisceau de mesure s-polarisé (12) par l'intermédiaire d'un troisième séparateur de faisceau (16), et
- un deuxième faisceau de référence s-polarisé (11) est dévié du premier faisceau de référence s-polarisé (10) par l'intermédiaire d'un quatrième séparateur de faisceau (17).

6. Agencement pour une détection optique par laser d'un mouvement de surface d'un échantillon (1), comprenant
- une source laser (2) qui génère un faisceau laser (3),
- un premier élément photoréfractif/électro-optique (4),
- des moyens pour superposer un premier faisceau de référence (10) obtenu à partir d'un faisceau laser (3) avec un premier faisceau de mesure (12) obtenu à partir de ce faisceau laser (3) dirigé jusque sur l'échantillon (1) et réfléchi par l'échantillon (1) dans le premier élément photoréfractif/électro-optique (4),
- des moyens pour convertir la lumière émergeant du premier élément photoréfractif/électro-optique (4) en un premier signal électrique,
**caractérisé par**,
- un deuxième élément photoréfractif/électro-optique (5),
- des moyens (8) pour appliquer des tensions mutuellement inverses aux premier et deuxième éléments photoréfractifs/électro-optiques (4, 5),
- des moyens pour générer un deuxième faisceau de référence identiques (11) sensiblement identique au premier faisceau de référence (10),
- des moyens pour générer un deuxième faisceau de mesure (13) sensiblement identique au premier faisceau de mesure (12),
- des moyens pour superposer le deuxième faisceau de référence (11) avec le deuxième faisceau de mesure (13) dans le deuxième élément photoréfractif/électro-optique (5),
- des moyens pour convertir la lumière émergeant du deuxième élément photoréfractif/électro-optique (5) en un deuxième signal électrique, et
- des moyens (9) pour évaluer le signal de différence entre le premier signal électrique et le deuxième signal électrique.

7. Agencement selon la revendication 6, **caractérisé par**
- des moyens pour séparer le faisceau laser (3) en des premier et deuxième faisceaux de référence (10, 11) de même qu'un premier faisceau de mesure (12) qui peut être dirigé jusque sur un échantillon (1), et
- des moyens pour dévier un deuxième faisceau de mesure (13) à partir du premier faisceau de mesure (12) réfléchi par l'échantillon (1).

8. Agencement selon la revendication 7, **caractérisé par**
- un premier séparateur de faisceau polarisant (14) pour séparer le faisceau laser (3) en un premier faisceau de référence s-polarisé (10) et un premier faisceau de mesure p-polarisé (12),
- un deuxième séparateur de faisceau polarisant (15) pour dévier la partie s-polarisée de l'échantillon (1) du premier faisceau de mesure (12) réfléchi par l'échantillon (1) dans la branche menant aux éléments photoréfractifs/électro-optiques (4, 5),
- un troisième séparateur de faisceau (16) pour dévier un deuxième faisceau de mesure s-polarisé (13) à partir du premier faisceau de mesure s-polarisé (12), et
- un quatrième séparateur de faisceau (17) pour dévier un deuxième faisceau de référence s-polarisée (11) à partir du premier faisceau de référence s-polarisé (10).

9. Agencement selon l'une quelconque des revendications 6 à 8, **caractérisé en ce que** les éléments photoréfractifs/électro-optiques (4, 5) sont fournis sous la forme de cristaux photoréfractifs/électro-optiques ou de polymères photoréfractifs/électro-optiques.

10. Agencement selon l'une quelconque des revendications 6 à 9, **caractérisé par** un laser d'excitation (31) qui peut être dirigé jusque sur l'échantillon (1) pour générer une onde ultrasonore.
